Europäisches Patentamt

European Patent Office

Office européen des brevets

(19)

(11) Veröffentlichungsnummer: **0 073 926**
**B1**

(12) **EUROPÄISCHE PATENTSCHRIFT**

(45) Veröffentlichungstag der Patentschrift:
31.10.84

(51) Int. Cl.³: **B 23 B 27/14**

(21) Anmeldenummer: 82106939.0

(22) Anmeldetag: 31.07.82

(54) Schneidwerkzeug, insbesondere Wendeschneidplatte.

(30) Priorität: 09.09.81 AT 3888/81

(43) Veröffentlichungstag der Anmeldung:
16.03.83 Patentblatt 83/11

(45) Bekanntmachung des Hinweises auf die Patenterteilung:
31.10.84 Patentblatt 84/44

(84) Benannte Vertragsstaaten:
BE CH DE FR GB IT LI NL SE

(56) Entgegenhaltungen:
DE - A - 2 515 686
DE - A - 2 545 769
DE - A - 2 840 610
DE - A - 2 845 211

(73) Patentinhaber: METALLWERK PLANSEE
GESELLSCHAFT M.B.H., A-6600 Reutte, Tirol (AT)

(72) Erfinder: Stricker, Rudolf, Innsbrucker Strasse 19,
A-6631 Lermoos (AT)

(74) Vertreter: Lohnert, Wolfgang, Dr., Metallwerk Plansee
GmbH, A-6600 Reutte, Tirol (AT)

BUNDESDRUCKEREI BERLIN

**Beschreibung**

Die Erfindung betrifft ein Schneidwerkzeug, insbesondere eine Wendeschneidplatte mit einer an die jeweilige Schneidkante anschließenden Spanablauffläche, wobei in der Spanablauffläche, nach der Schneidkante beginnend, mindestens zwei den Span quer zur Ablaufrichtung verformende Vertiefungen vorgesehen sind.

Spanablaufflächen in Form von speziell gestalteten Spanleitstufen bei Schneidwerkzeugen dienen vor allem dazu, bei der spanabhebenden Formgebung einen guten Spanablauf ohne Gefährdung des Bedienungspersonals und ohne spanbedingte Zerstörung der Schneidkante zu gewährleisten. Die wesentlichen Forderungen an Spanleitstufen bestehen darin, eine möglichst gute Spanverformung und guten Spanbruch über einen möglichst großen Bereich unterschiedlicher Schnittbedingungen zu erbringen und gleichzeitig der an sich gegensätzlichen Forderung nach Kleinhalten der durch die Spanverformung zusätzlich auftretenden Schnittkräfte gerecht zu werden, da höhere Schnittkräfte mit einer Erhöhung der Schneidkanten-Temperatur und Verringerung der Standzeit verbunden sind.

Um die mechanische Festigkeit der Schneidkante durch die Spanleitstufe nicht zu stark herabzusetzen und damit ein durch Schneidkantenausbrüche verbundenes vorzeitiges Standzeitende des Schneidwerkzeuges in Kauf nehmen zu müssen, hat es sich seit langem bewährt, die Spanleitstufen nicht unmittelbar an der Schneidkante beginnen zu lassen, sondern zwischen Schneidkante und Spanleitstufe eine umlaufende Fase konstanter oder auch veränderlicher Breite vorzusehen.

Die DE-OS 25 15 686 beschreibt ein Schneidwerkzeug, bei dem die Spanfläche mit mehreren Eindrückungen oder Nuten versehen ist, die voneinander getrennt sind und die in einem gewissen Abstand von der Schneidkante angeordnet sind. Die Nuten verlaufen vorzugsweise senkrecht zur Schneidkante und verringern entsprechend der dort offenbarten Lehre die Kontaktfläche des ablaufenden Spanes mit der Spanfläche, wodurch die Reibung und damit die auftretende Temperaturbelastung der Schneidkante vermindert wird. Die Nuten haben jedoch keinen Einfluß auf die Spanverformung und den Spanbruch, so daß dieses Schneidwerkzeug gegenüber vorbekannten Ausführungen nur beschränkte Vorteile bringt.

Aus der DE-OS 25 45 769 ist ebenfalls eine Wendeschneidplatte der eingangs erwähnten Art bekannt. Die Vertiefungen sind dabei vorzugsweise kugelkalottenförmig oder mit einem kreissegmentförmigem Querschnitt ausgebildet. Mindestens eine Vertiefung ist vorzugsweise innerhalb des Übergangsbereiches von der Hauptschneidkante zur Nebenschneidkante angeordnet. Nachteilig dabei ist, daß die Kerben, in Spanablaufrichtung gesehen, eine ansteigende rückwärtige Flanke aufweisen. Die ablaufenden Späne werden durch die Flanke unverhältnismäßig stark verformt und es kommt insbesondere bei großen Vorschüben zu einem Überbrechen der Späne, was mit hohen Schnittkräften sowie mit einer übermäßig großen Temperaturentwicklung an der Schneidkante verbunden ist. Durch die Anordnung mindestens einer Vertiefung im Übergangsbereich zwischen Hauptschneidkante und Nebenschneidkante erfolgt eine mechanische Schwächung der mechanisch und thermisch am stärksten beanspruchten Schneidecke. Diese Ausführung kommt insgesamt den eingangs an Spanleitstufen gestellten Forderungen nur unzureichend nach.

Der Erfindung liegt daher die Aufgabe zu Grunde, ein Schneidwerkzeug der eingangs beschriebenen Art derart zu gestalten, daß ein gegenüber bekannten Ausführungen verbesserter Spanablauf in einem möglichst großen Bereich von unterschiedlichen Schnittbedingungen erreicht wird und gleichzeitig gegenüber bekannten Spanleitstufen-Ausführungen eine Verringerung der Schnittkräfte und der Schneidentemperatur und damit eine Erhöhung der Standzeit der Schneidkante erreicht wird.

Diese Aufgabe wird erfindungsgemäß dadurch gelöst, daß die als längliche Kerben ausgebildeten Vertiefungen, von der Schneidkante aus gesehen, ohne rückseitige Begrenzungsfläche in den Mittelbereich des Schneidwerkzeuges einmünden, eine erste Kerbe in der Spanablauffläche unmittelbar außerhalb des Übergangsbereiches zwischen Hauptschneidkante und Nebenschneidkante angebracht ist, die einzelnen Kerben gegen die Schneidkantenmitte hin zueinander größer werdende Abstände aufweisen, die einzelnen Kerben mit der Schneidkante gegen die Schneidkantenmitte hin zunehmende Winkel einschließen und die zwei Seitenflanken jeder Kerbe in bezug auf die Horizontale unterschiedliche Neigungswinkel aufweisen, wobei der Neigungswinkel der zur Schneidecke näher gelegenen Seitenflanke größer ist als der Neigungswinkel der anderen Seitenflanke.

Als vorteilhaft hat es sich erwiesen, wenn die erste in der Spanfläche angebrachte Kerbe, von der Schneidspitze aus gesehen, einen Winkel im Bereich von 40° bis 60°, vorzugsweise 45° bis 50° und die auf die erste Kerbe folgende bzw. folgenden Kerben einen Winkel im Bereich von 50° bis 90° mit der Schneidkante einschließen.

Die zur Schneidecke näher gelegene Seitenflanke jeder Kerbe weist vorteilhafterweise in bezug auf die Horizontale einen Neigungswinkel im Bereich von 70° bis 45° und die andere Seitenflanke einen Neigungswinkel im Bereich von 30° bis 10° auf. Wenn die erfindungsgemäße Anordnung und Ausgestaltung der Längskerben innerhalb dieser speziellen Winkelbereiche erfolgt, ergibt sich eine optimale Spanablenkung und ein optimaler Spanbruch über praktisch das ganze Spektrum sinnvoll möglicher unterschiedlicher Schnittbedingungen und unterschiedlicher Werkstoffe.

Die erfindungsgemäße Ausgestaltung des Schneidwerkzeuges erfüllt die in der Aufgabenstellung gegebenen Forderungen in hohem Maße. Im einzelnen lassen sich die folgenden Vorteile gegenüber bekannten Ausführungen beschreiben.

Dadurch, daß die Vertiefungen als längliche Kerben ausgebildet sind, die von der Schneidkante aus gesehen ohne rückseitige Begrenzungsfläche in den gegenüber der Schneidkante abgesenkten Mittelbereich des Schneidwerkzeuges einmünden, wird in einem nicht vorsehbaren Maße erreicht, daß eine in weiten Bereichen von den Schnittbedingungen unabhängige, günstige Spanverformung erzielt wird. Insbesondere bei großen Vorschüben wirkt sich diese spezielle Ausgestaltung besonders günstig aus, da die Spanverformung im Gegensatz zu bekannten Schneidwerkzeugen mit rückseitig geschlossenen Vertiefungen lediglich über die Seitenflanken der Kerbe erfolgt. Es ergibt sich dadurch eine weniger starke Spanstauchung, die mit niedrigeren Schnittkräften und einer niedrigeren Schneidentemperatur verbunden ist.

Dadurch, daß die erste Kerbe im Bereich unmittelbar außerhalb des Übergangsbereiches zwischen Hauptschneidkante und Nebenschneidkante, also außerhalb des Eckenradius-Bereiches angeordnet ist und mit der Schneidkante den kleinsten Winkel aller Kerben einschließt, ergibt sich, insbesondere bei der Schlichtbearbeitung, eine optimale Spanführung, ohne daß die Schneidecke mechanisch geschwächt wird. Letzteres ist insbesondere zur Vermeidung von Schneideckenbrüchen bei der Schruppbearbeitung wichtig.

Durch die gegen die Schneidkantenmitte hin zunehmenden Winkel, welche die einzelnen Kerben mit der Schneidkante einschließen und durch die zunehmenden Abstände der Kerben gegeneinander, werden die Späne bei größeren Schnittiefen gegenüber bekannten Ausführungen nicht mehr so stark quer zur Vorschubrichtung verformt. Die Folgen sind geringere Spanstauchung und damit geringere Schnittkräfte und thermische Beanspruchung der Schneidkante.

Die unterschiedliche Neigung der Seitenflanken bewirken überraschenderweise ebenfalls eine deutliche Verbesserung des Spanablaufes. Die Seitenflanke, die der Schneidecke näher liegt, weist einen in bezug auf die Horizontale größeren Neigungswinkel auf und verdrängt den ablaufenden Span in der gewünschten Richtung weg von der bearbeiteten Oberfläche, während die andere schwächer geneigte Seitenflanke das Abdrängen des Spanes infolge ihres vergleichsweise geringeren Reibungswiderstandes unterstützt.

Ein Ausführungsbeispiel einer Wendeschneidplatte gemäß der Erfindung ist durch die Fig. 1 bis 3 dargestellt. Es zeigt

Fig. 1 eine dreieckige Wendeschneidplatte, deren Spanablauffläche mit den erfindungsgemäßen Kerben versehen ist,

Fig. 2 einen Schnitt quer zur Längsachse einer erfindungsgemäßen Kerbe,

Fig. 3 einen Längsschnitt durch eine erfindungsgemäße Kerbe.

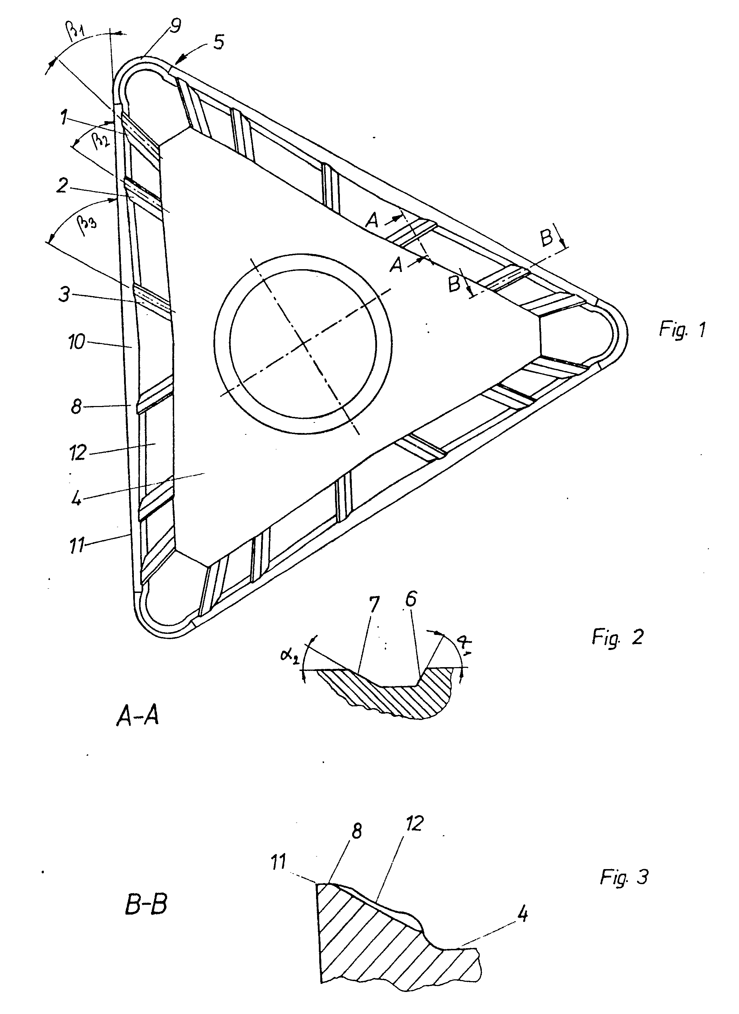

Fig. 1 zeigt eine dreieckförmige Wendeschneidplatte mit Mittelloch. Die einzelnen Schneidkanten weisen eine Fase -8- auf, die in den Schneidecken -9- die geringste Breite aufweist und die von den Schneidecken -9- weg gegen das Ende der wirksamen Schneidkantenlänge -10- zu kontinuierlich in ihrer Breite zunimmt. Anschließend an die Schneidkantenfase -8- verläuft eine Spanleitstufe -12-, die in den Mittelbereich -4- der Wendeschneidplatte ausläuft. Quer zur Schneidkante -11- durch die Spanleitstufe -12- verlaufen innerhalb jedes Bereiches der wirksamen Schneidkantenlänge drei längliche Kerben -1-, -2-, -3-. Die einzelnen Kerben beginnen am Übergangsbereich von Schneidkantenfase -8- und Spanleitstufe -12- und münden am Ende der Spanleitstufe -12- von der Schneidkante -11- her gesehen ohne rückwärtige Begrenzungsfläche in den tiefer gelegenen Mittelbereich -4- der Wendeschneidplatte. Die erste Kerbe -1- ist außerhalb des Eckenradius, also unmittelbar außerhalb des Übergangsbereiches -5- zwischen Hauptschneidkante und Nebenschneidkante unter einem Winkel -$\beta_1$- von 45° zur Schneidkante -11- angeordnet. Die zweite Kerbe -2- schließt einen Winkel -$\beta_2$- von 55° mit der Schneidkante -11- ein und die dritte Kerbe -3- einen Winkel -$\beta_3$- von 60°. Die Abstände der einzelnen Kerben -1-, -2-, -3- zueinander nehmen gegen das Ende der wirksamen Schneidkantenlänge -10- hin, zu. Jede einzelne Kerbe -1-, -2-, -3- wird mit Ausnahme des abfallenden Anfangsbereiches durch eine ebene, im wesentlichen rechteckförmige Grundfläche und durch ebene, gleichfalls im wesentlichen rechteckförmige Seitenflanken -6-, -7- begrenzt, die unterschiedliche Neigungswinkel -$\alpha_1$-, -$\alpha_2$- aufweisen. Die Kerben -1-, -2-, -3- weisen im wesentlichen konstante Tiefe und Breite auf.

Fig. 2 zeigt einen Schnitt quer zur Längsrichtung der Kerbe -2-. Es ist deutlich zu erkennen, daß die zur Schneidecke -9- näher gelegene Seitenflanke -6- einen größeren Neigungswinkel -$\alpha_1$- von 60° aufweist. Die andere Seitenflanke -7- weist einen Neigungswinkel -$\alpha_2$- von 30° auf.

Fig. 3 zeigt einen Längsschnitt durch die Kerbe -1-. Man ersieht, daß die Kerbe, außerhalb ihres abfallenden Bereiches am Beginn, im wesentlichen konstante Tiefe aufweist und ohne rückwärtige Begrenzungsfläche in den vertieft gelegenen Mittelbereich -4- der Wendeschneidplatte übergeht.

Die Erfindung ist keinesfalls auf die dargestellte Form beschränkt. So ist es insbesondere denkbar, die erfindungsgemäßen Längskerben auch bei Schneideinsätzen ohne Spanleitmulden zu verwenden. Ebenso ist es denkbar, die Längskerben nicht durch ebene, sondern durch kurvenförmige Seitenflächen zu begrenzen. Auch kann die Breite, Tiefe sowie Neigung der Längskerbe längs ihrer Längserstreckung variieren. Insbesondere bei Schwerzerspanungs-Schneidwerkzeugen oder Schneidwerkzeugen für die Fräsbearbeitung kann es zweckmäßig sein, die Längskerben über die Schneidkantenmitte hinaus bis zum Ende der Schneidkante hin anzuordnen. Der Abstand der Kerben zueinander und die Winkel, die die Kerben mit der Schneidkante einschließen, nehmen dann von der Schneidecke weg bis zum Ende der Schneidkante hin zu.

## Patentansprüche

1. Schneidwerkzeug, insbesondere Wendeschneidplatte mit einer an die jeweilige Schneidkante (11) anschließenden Spanablauffläche, wobei in der Spanablauffläche, nahe der Schneidkante (11) beginnend, mindestens zwei den Span quer zur Ablaufrichtung verformende Vertiefungen (1, 2, 3) vorgesehen sind, gekennzeichnet durch folgende Merkmale:

a) die als längliche Kerben (1, 2, 3) ausgebildeten Vertiefungen münden, von der Schneidkante (11) aus gesehen, ohne rückseitige Begrenzungsfläche in den Mittelbereich (4) des Schneidwerkzeuges ein

b) eine erste Kerbe (1) ist in der Spanablauffläche unmittelbar außerhalb des Übergangsbereiches (5) zwischen Hauptschneidkante und Nebenschneidkante eingebracht,

c) die einzelnen Kerben (1, 2, 3) weisen gegen die Schneidkantenmitte (10) hin zueinander größer werdende Abstände auf,

d) die einzelnen Kerben (1, 2, 3) schließen mit der Schneidkante (11) gegen die Schneidkantenmitte (10) hin zunehmende Winkel ($\beta_1, \beta_2, \beta_3$) ein,

e) die zwei Seitenflanken (6, 7) jeder Kerbe weisen in bezug auf die Horizontale unterschiedliche Neigungswinkel auf, wobei der Neigungswinkel ($\alpha_1$) der zur Schneidecke (9) näher gelegenen Seitenflanke (6) größer ist als der Neigungswinkel ($\alpha_2$) der anderen Seitenflanke (7).

2. Schneidwerkzeug, insbesondere Wendeschneidplatte nach Anspruch 1, dadurch gekennzeichnet, daß die erste Kerbe (1) einen Winkel ($\beta_1$) im Bereich von 40° bis 60° mit der Schneidkante (11) einschließt.

3. Schneidwerkzeug, insbesondere Wendeschneidplatte nach einem der Ansprüche 1 bis 2, dadurch gekennzeichnet, daß die auf die erste Kerbe (1) folgenden Kerben (2, 3) einen Winkel ($\beta_2, \beta_3$) im Bereich zwischen 50° und 90° mit der Schneidkante (11) einschließen.

4. Schneidwerkzeug, insbesondere Wendeschneidplatte nach einem der Ansprüche 1 bis 3, dadurch gekennzeichnet, daß die zur Schneidecke (9) näher gelegene Seitenflanke (6) jeder Kerbe (1, 2, 3) in bezug auf die Horizontale einen Neigungswinkel ($\alpha_1$) im Bereich von 70° bis 45° und die andere Seitenflanke (7) einen Neigungswinkel ($\alpha_2$) im Bereich von 30° bis 10° aufweist.

## Claims

1. Cutting tool, especially indexable cutting insert having a chip runoff area adjoining each cutting edge (11), said chip runoff area is provided with at least two hollows (1, 2, 3) deforming a chip transversely to the direction of chip runoff, characterized by the following features:

a) the hollows having the form of longitudinal notches (1, 2, 3) leading into the middle region (4) of the cutting tool without a rear limiting surface in sight from the cutting edge (11),

b) a first notch (1) being located in the chip runoff area immediately outside the transitional region (5) between primary and secondary cutting edge,

c) the individual notches (1, 2, 3) having increasingly larger spacings between one another towards the middle portion (10) of the cutting edge,

d) the individual notches (1, 2, 3) and the cuting edge (11) enclosing angles ($\beta_1, \beta_2, \beta_3$) which increase towards the middle portion (10) of the cutting edge,

e) the two sides (6, 7) of each notch having different angles of inclination in relation to the horizontal, the angle of inclination ($\alpha_1$) of the side (6) located nearer the cutting corner (9) being greater than the angle of inclination ($\alpha_2$) of the other side (7).

2. Cutting tool especially indexable cutting insert according to claim 1, characterized in, that the first notch (1) encloses an angle ($\beta_1$) which is in a range of 40° to 60° with respect to the cutting edge (11).

3. Cutting tool, especially indexable cutting insert according to one of the claims 1 to 2, characterized in, that the notches (2, 3) following the first notch (1) enclosing an angle ($\beta_2, \beta_3$) which is in a range of 50° to 90° with respect to the cutting edge (11).

4. Cutting tool especially indexable cutting insert according to one of the claims 1 to 3, characterized in, that the side (6) of each notch (1, 2, 3) located nearer to the cutting corner encloses an angle of inclination ($\alpha_1$) in a range between 70° and 45° and the other side (7) an angle of inclination ($\alpha_2$) in a range between 30° and 10° in relation to the horizontal.

## Revendications

1. Outil de coupe, en particulier plaquette amovible, avec une surface d'écoulement de copeaux se raccordant à chaque arête de coupe (11), ladite surface d'écoulement de copeaux comportant au moins deux dépressions (1, 2, 3) qui commencent à proximité de l'arête de coupe (11) et qui déforment le copeau transversalement à la direction d'écoulement, caractérisé par les caractéristiques suivantes:

a) les dépressions, réalisées en tant qu'encoches oblongues (1, 2, 3), débouchent dans le domaine médian (4) de l'outil de coupe, cela sans surface de délimitation côté arrière quand on les considère depuis l'arête de coupe (11),

b) une première encoche (1) est aménagée dans la surface d'écoulement de copeaux, immédiatement à l'extérieur du domaine de transition (5) entre arête de coupe principale et arête de coupe secondaire,

c) les enchoes individuelles (1, 2, 3) sont séparées par des intervalles d'autant plus grands qu'elles sont plus proches du milieu (10) de l'arête de coupe,

d) les encoches individuelles (1, 2, 3) formet, avec l'arête de copue (11), des angles $(\beta_1, \beta_2, \beta_3)$ d'autant plus grands qu'elles sont plus proches du milieu (10) de l'arête de coupe,

e) les deux flancs latéraux (6, 7) de chaque encoche présentent, par rapport à l'horizontale, des angles de pente différents, l'angle de pente $(\alpha_1)$ du flanc latéral (6) situé plus près du coin (9) du tranchant étant plus grand que l'angle de pente $(\alpha_2)$ de l'autre flanc latéral (7).

2. Outil de coupe, en particulier plaquette amovible selon la revendication 1, caractérisé en ce que la première encoche (1) forme, avec l'arête de coupe (11), un angle $(\beta_1)$ dans la plage de 40° à 60°.

3. Outil de coupe, en particulier plaquette amovible selon l'une des revendications 1 à 2, caractérisé en ce que les encoches (2, 3) suivant la première encoche (1) forment, avec l'arête de coupe (11), un angle $(\beta_2, \beta_3)$ dans la plage entre 50° et 90°.

4. Outil de coupe, en particulier plaquette amovible selon l'une quelconque des revendication 1 à 3, caractérisé en ce que le flanc latéral (6) de chaque encoche (1, 2, 3) situé le plus près du coin (9) du tranchant présente, par rapport à l'horizontale, un angle de pente $(\alpha_1)$ dans la plage de 70° à 45°, et l'autre flanc latéral (6) présente un angle de pente $(\alpha_2)$ dans la plage de 30° à 10°.

0 073 926

Fig. 1

A-A

Fig. 2

B-B

Fig. 3

7